# EUROPÄISCHE PATENTANMELDUNG

(11) **EP 0 761 302 A1**
(43) Veröffentlichungstag der Anmeldung: **12.03.1997**
(21) Anmeldenummer: 96111563.1
(22) Anmeldetag: 18.07.1996
(51) Int. Cl.: B01J 19/30

(54) **Verwirbelungseinheit, insbesondere für Stoff- oder Wärmeaustauschkolonnen**

(30) Priorität: 11.08.1995 DE 19530267
(71) Anmelder: Raschig Aktiengesellschaft, D-67061 Ludwigshafen (DE)
(72) Erfinder: Schultes, Michael, Dr. Ing., 67061 Ludwigshafen/Rhein (DE)
(74) Vertreter: Leitner, Waldemar, Dr. techn.

(57) **Zusammenfassung**

Beschrieben wird eine Verwirbelungseinheit, insbesondere für Stoff- und/oder Wärmeaustauschkolonnen, die von einer Gas- und/oder Flüssigkeitsströmung durchsetzt werden, wobei die Verwirbelungseinheit (1) mindestens einen Wirbelkörper (10) zur Verwirbelung der Gas- und/oder Flüssigkeitsströmung aufweist. Erfindungsgemäß ist vorgesehen, daß die Verwirbelungseinheit (1) einen Gitterkörper (2) aufweist, in dem mindestens der eine Wirbelkörper (10) aufnehmbar ist.

## Beschreibung

Die Erfindung betrifft eine Verwirbelungseinheit, insbesondere für Stoff- und/oder Wärmeaustauschkolonnen, die von einer Gas- und/oder Flüssigkeitsströmung durchsetzt werden, wobei die Verwirbelungseinheit mindestens einen Wirbelkörper zur Verwirbelung der Gas- und/oder Flüssigkeitsströmung aufweist.

Derartige Stoff- oder Wärmeaustauschkolonnen sind bekannt. Diese weisen mehrere in Strömungsrichtung angeordnete Betten auf, auf die jeweils lose Wirbelkörper geschüttet werden. Eine derartige Vorgehensweise besitzt den Nachteil, daß die von den Wirbelkörpern hervorgerufenen Wirbelschichten leicht inhomogen werden, da der in die Kolonne eingeleitete, die Wirbelkörper beaufschlagende Gasstrom bewirkt, daß diese aus ihrer Ruhelage weggeblasen werden und die Füllkörper sich dann an der Wand der Kolonne anlagern oder auf benachbarte Wirbelkörper auflegen. Diese über den Querschnitt der Kolonne inhomogene Verteilung der Wirbelkörper bewirkt desweiteren in nachteiliger Art und Weise eine Ungleichverteilung der Phasen in der Kolonne sowie eine Reduzierung des Stoff- und/oder Wärmeaustausches.

Es ist daher Aufgabe der Erfindung, eine Verwirbelungseinheit der eingangs genannten Art derart weiterzubilden, daß in besonders einfacher Art und Weise eine verbesserte Homogenität der von den Wirbelkörpern erzeugten Wirbelschicht erreicht wird.

Diese Aufgabe wird erfindungsgemäß dadurch gelöst, daß die Verwirbelungseinheit einen Gitterkörper aufweist, in dem mindestens der eine Wirbelkörper aufnehmbar ist.

Durch die erfindungsgemäße Maßnahme wird in besonders einfacher Art und Weise eine insbesondere für Stoff- oder Wärmeaustauschkolonnen geeignete Verwirbelungseinheit geschaffen, die es besonders einfach ermöglicht, weitgehend homogene und stabile Wirbelschichten innerhalb der Kolonne zu erzeugen. Durch die erfindungsgemäß vorgesehene Lokalisierung des Wirbelkörpers der erfindungsgemäßen Verwirbelungseinheit innerhalb eines durch deren Gitterkörper beschränkten Gebietes kann sich der Wirbelkörper nicht mehr weit aus seiner Ruheposition entfernen, so daß eine zu einer Fehlverteilung führende inhomogene Anhäufung oder Anlagerung der Wirbelkörper im Wandbereich, die bei den bekannten, Wirbelkörper einsetzenden Kolonnen auftritt, nicht mehr erfolgen kann.

Desweiteren besitzen die erfindungsgemäßen Maßnahmen den Vorteil, daß hierdurch eine Verwirbelungseinheit geschaffen wird, welche schüttfähig ist, so daß die bei den bekannten Kolonnen vorgesehenen Kolonnensegmente, die, der abschnittsweisen Aufnahme der Wirbelkörper dienen, ersatzlos entfallen können, woraus eine einfachere und daher kostengünstigere Herstellung einer Kolonne resultiert.

Die erfindungsgemäßen Maßnahmen ermöglichen es in vorteilhafter Art und Weise auch, daß die erfindungsgemäße Verwirbelungseinheit besonders vorteilhaft in Kolonnen für Feststofflösungen einsetzbar ist, bei denen bisher immer die Gefahr bestand, daß in den Kolonnen befindliche Wirbel- und/oder Füllkörper sowie die Einbauten zur Gestaltung der Kolonnensegmente infolge von Feststoffablagerungen zuwachsen, was in nachteiliger Art und Weise zu einer Erhöhung des Druckverlustes in der Kolonne resultiert. Der erfindungsgemäß in dem Gitterkörper aufgenommene Wirbelkörper der erfindungsgemäßen Verwirbelungseinheit bewirkt, daß durch die durch die Gas- oder Flüssigkeitsströmung hervorgerufene Bewegung des Wirbelkörpers im Gitterkörper dessen Gitterstäbe von eventuellen Ablagerungen freigeschlagen werden.

Eine vorteilhafte Weiterbildung der Erfindung sieht vor, daß der Gitterkörper ein mehrere Gitterstäbe aufweisender Würfel ist oder zumindest würfelförmig oder quaderförmig ausgebildet ist. Eine derartige Gestaltung des Gitterkörpers besitzt den Vorteil, daß sich die einzelnen in die Kolonnen geschütteten Verwirbelungseinheiten mit würfeligen Gitterkörpern besonders dicht schütten lassen, so daß insbesondere auch bei hohen Gasdrücken eine homogene Verteilung der Verwirbelungseinheiten und damit der Wirbelkörper gegeben ist.

Eine weitere vorteilhafte Weiterbildung der Erfindung sieht vor, daß der Gitterkörper als Rotationskörper, insbesondere als Kugel oder Ellipsoid, ausgebildet ist, der einen Radius aufweist, der größer als der Radius des in ihm aufgenommenen Wirbelkörpers ist. Eine derartige Ausgestaltung des Gitterkörpers der Verwirbelungseinheit besitzt den Vorteil, daß hierdurch besonders effektiv einer Ablagerung von Feststoffen einer Suspensionslösung an den Gitterstäben des Gitterkörpers entgegengewirkt werden kann, da sämtliche Bereiche eines derartigen Gitterkörpers von dem darin aufgenommenen Wirbelkörper beaufschlagt und damit von eventuellen Anlagerungen freigeschlagen werden können, so daß einem Zuwachsen des Gitterkörpers von vorneherein wirksam entgegengewirkt wird.

Weitere vorteilhafte Weiterbildungen der Erfindung sind Gegenstand der Unteransprüche.

Weitere Einzelheiten der Erfindung sind dem Ausführungsbeispiel zu entnehmen, das im folgenden anhand der einzigen Figur beschrieben wird. Es zeigt:

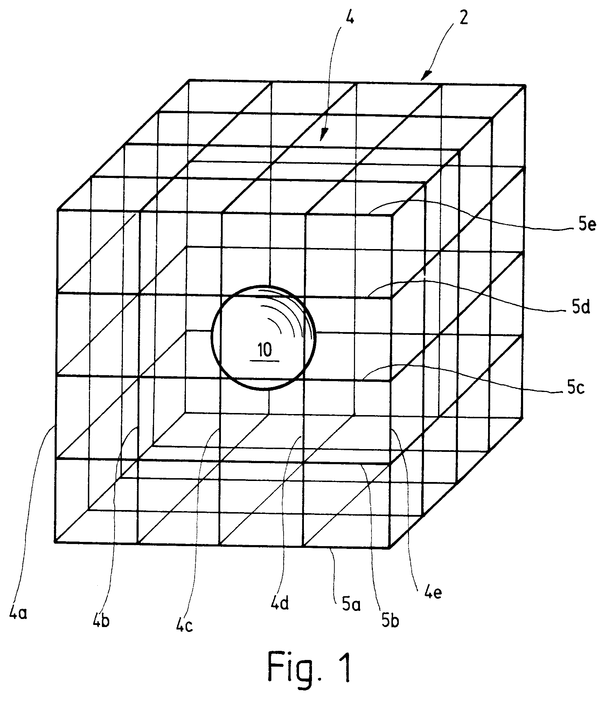

- Figur 1: ein Ausführungsbeispiel einer Verwirbelungseinheit

Das in Figur 1 dargestellte Ausführungsbeispiel einer allgemein mit 1 bezeichneten Verwirbelungseinheit weist einen Gitterkörper 2 auf, in den ein Wirbelkörper 10 aufgenommen ist. Die Ausbildung derartiger Wirbelkörper 10 ist an und für sich bekannt, so daß diese an dieser Stelle nicht näher beschrieben werden muß. Es soll nur angeführt werden, daß es nicht nur möglich ist, den in der Figur 1 dargestellten, eine Kugelform aufweisenden Wirbelkörper 10 einzusetzen. Vielmehr ist es denkbar, auf den entsprechenden Einsatzzweck angepaßte, andersförmig gestaltete Wirbelkörper 10, z.B. polygonale oder ellipsoide Wirbelkörper in der Verwirbelungseinheit 1 zu verwenden. Desweiteren kann auch mehr als ein Wirbelkörper 10 im Gitterkörper aufgenommen sein.

Der den Wirbelkörper 10 aufnehmende Gitterkörper 2 ist im Fall des hier gezeigten Ausführungsbeispiels als Gitterwürfel ausgebildet, der eine Vielzahl von ein Gitternetz 4 ausbildenden Gitterstäben 4a-4e, 5a-5e aufweist, wobei der Abstand zweier benachbarter Gitterstäbe derart bemessen ist, daß der Wirbelkörper 10 nicht durch das den Würfel ausbildende Gitternetz 4 hindurchtreten kann, d.h., daR die Gitterstäbe 4a-4e, 5a-5e vorzugsweise einen Abstand aufweisen, der kleiner als der Durchmesser des Wirbelkörpers 10 ist.

Die in Figur 1 dargestellte Würfelform des Gitterkörpers 2 ist aber auch hier nicht zwingend. Vielmehr ist es auch möglich, den Gitterkörper 2 als Rotationskörper, insbesondere als Kugel oder als Ellipsoid, auszubilden. Eine derartige Gestaltung besitzt insbesondere bei einem Einsatz der Verwirbelungseinheit 1 in Kolonnen für Feststofflösungen den Vorteil, da hierdurch der im Gitterkörper 2 aufgenommene Wirbelkörper 10 alle Bereiche des Gitterkörpers 2 beaufschlagen und damit einem Ansetzen von Feststoffen an den Gitterstäben 4a-4e, 5a-5e des Gitternetzes 4 entgegenwirken kann.

Abschließend ist noch auszuführen, daß es sich für den Fachmann aus obiger Beschreibung eindeutig ergibt, daß die beschriebene Verwirbelungseinheit 1 nicht nur als schüttfähige Verwirbelungseinheit ausbildbar ist. Vielmehr ist es auch möglich, eine auf dem oben beschriebenen Konzept basierende Packung zu realisieren, insbesondere dadurch, daß die Gitterkörper 2 der Verwirbelungseinheit 1 einzelne Zellen einer regelmäßigen Gitterstruktur der Packung einer Kolonne ausbilden. Es ist aber auch möglich, daß durch eine entsprechende Aneinderreihung von Verwirbelungseinheiten 1 in der Kolonne eine geordnete Struktur von Verwirbelungseinheiten 1 ausbildbar ist.

## Patentansprüche

1. Verwirbelungseinheit, insbesondere für Stoff- und/oder Wärmeaustauschkolonnen, die von einer Gas- und/oder Flüssigkeitsströmung durchsetzt werden, wobei die Verwirbelungseinheit (1) mindestens einen Wirbelkörper (10) zur Verwirbelung der Gas- und/oder Flüssigkeitsströmung aufweist, dadurch gekennzeichnet, daß die Verwirbelungseinheit (1) einen Gitterkörper (2) aufweist, in dem mindestens der eine Wirbelkörper (10) aufnehmbar ist.

2. Verwirbelungseinheit nach Anspruch 1, dadurch gekennzeichnet, daß der Gitterkörper (2) aus einer Anzahl von ein Gitternetz (4) ausbildenden Gitterstäben (4a-4e; 5a-5e) ausgebildet ist.

3. Verwirbelungseinheit nach Anspruch 2, dadurch gekennzeichnet, daß die den Gitterkörper (2) der Verwirbelungseinheit (1) ausbildenden Gitterstäbe (4a-4e; 5a-5e) paarweise einen Abstand aufweisen, der kleiner als der Durchmesser des Wirbelkörpers (10) ist.

4. Verwirbelungseinheit nach einem der Ansprüche 1 bis 3, dadurch gekennzeichnet, daß der Gitterkörper (2) der Verwirbelungseinheit (1) mindestens eine polygonale Fläche aufweist.

5. Verwirbelungseinheit nach Anspruch 4, dadurch gekennzeichnet, daß der Gitterkörper (2) als Quader oder Würfel ausgebildet ist oder eine quader- oder würfelförmige Gestalt aufweist.

6. Verwirbelungseinheit nach einem der Ansprüche 1 bis 3, dadurch gekennzeichnet, daß der Gitterkörper (2) der Verwirbelungseinheit (1) eine rotationssymmetrische Gestalt aufweist.

7. Verwirbelungseinheit nach Anspruch 6, dadurch gekennzeichnet, daß der Gitterkörper (2) der Verwirbelungseinheit (1) als Kugel oder Ellipsoid oder kugel- oder ellipsoidförmig ausgebildet ist.

8. Verwirbelungseinheit nach einem der vorangehenden Ansprüche, dadurch gekennzeichnet, daß der im Gitterkörper (2) der Verwirbelungseinheit (1) aufgenommene Wirbelkörper (10) als Kugel oder Ellipsoid oder kugel- oder ellipsoidförmig ausgebildet ist.

9. Verwirbelungseinheit nach einem der Ansprüche 1 bis 8, dadurch gekennzeichnet, daß der im Gitterkörper (2) der Verwirbelungseinheit (1) aufgenommene Wirbelkörper (10) eine polygonale, insbesondere eine würfelige oder quaderförmige Gestalt aufweist.
